# EUROPEAN PATENT APPLICATION

(11) **EP 4 846 830 A1**
(43) Date of publication of application: **02.12.2026**
(21) Application number: 26174019.5
(22) Date of filing: 22.04.2026
(51) Int. Cl.: A01D 34/00, A01D 34/66, A01D 43/10, A01D 57/01

(54) **MOWER UNIT CONTROL**

(30) Priority: 28.05.2025 GB 202508273
(71) Applicant: AGCO International GmbH, 8212 Neuhausen am Rheinfall (CH)
(72) Inventor: Duering Jensen, Kenneth, DK-8930 Randers (DK); Hoe, Mads, Randers (DK); HERMANN, Dan, DK-8930 Randers (DK)
(74) Representative: AGCO Intellectual Property Department

(57) **Abstract**

Systems and methods are provided for controlling operation of one or more operable components of an agricultural machine operating in a working environment, where the machine comprises a tractor having a mowing unit operably coupled thereto. A sensor arrangement is operably mounted to the mowing unit and has a sensing region which encompasses a crop flow associated with the mowing unit. Sensor data from the arrangement is analysed to determine a crop flow parameter for the crop material mowing through the mowing unit. Using this information, an operational position of one or more crop guiding components upstream of the sensing region can be controlled for controlling crop movement into the mowing unit in dependence on the determined crop flow parameter.

## Description

### CROSS-REFERENCE TO RELATED APPLICATIONS

Not applicable.

### FIELD

Embodiments of the present disclosure relate generally to systems and methods for controlling operation of operable components of an agricultural machine, and in particular a mowing unit of such a machine.

### BACKGROUND

It is known to mount or otherwise couple implements, and specifically mowing implements to agricultural vehicles such as tractors. Such implements may be front mounted or may be towed by the vehicle. Additionally, some mowing implements are integrated fully with a machine, thereby providing a self-contained and self-propelled mowing apparatus such as a windrower. In either case, there is a need to monitor performance of such mowing implements and units as a measure to monitor crop quality and automate operational adjustments to maximize crop quality and yield.

### BRIEF SUMMARY

In an aspect of the invention there is provided an agricultural machine, comprising: a tractor, a mowing unit operably coupled to the tractor for cutting crop material growing in a working environment; a sensor arrangement operably mounted to the mowing unit and having a sensing region which encompasses a crop flow associated with the mowing unit; and one or more controllers operably configured to: receive sensor data from the sensor arrangement; analyse the sensor data to determine a crop flow parameter for the crop material mowing through the mowing unit; and generate and output a control signal for controlling an operational position of one or more crop guiding components upstream of the sensing region for controlling crop movement into the mowing unit in dependence on the determined crop flow parameter.

Advantageously, through analysing a crop flow measure of crop material passing through the mowing unit the mower operation may be automated to achieve, e.g. a better cut quality, or a more uniform conditioning of the crop, or a more uniform swath profile. Monitoring the crop flow utilising a sensing arrangement onboard the mowing unit allows for this to be done in real time, allowing for real time automation of the mowing unit operation.

The tractor may comprise a single mowing unit operably coupled thereto (e.g. via a hitch point). Alternatively, the tractor may comprise multiple mowing units. The or each mowing unit may comprise a cutting system.

The sensor unit may be mounted on or otherwise be associated with the cutting system of the mowing unit. This may include mounting on a surface of the mowing unit and having a sensing region which encompasses a crop flow pre-processing of the crop material by the cutting system, in use. Advantageously, the sensor arrangement may be configured to analysing a flow of material into the cutting system. In alternative embodiment, the sensing region may encompass a crop flow post-processing of the crop material by the cutting system. The sensor unit may be mounted to an underside of the mowing unit.

Where the machine comprises multiple mowing units, the sensor arrangement may comprise multiple sensor units. This may include one (or more) sensor units associated with each mowing unit.

The cutting system may comprise, for example, one or more cutting knives or discs. The cutting system may comprise a cutter bar.

The sensor arrangement may comprise an optical sensor. The optical sensor may comprise a camera, such as a mono camera, for example. This may comprise an RGB camera.

The one or more controllers may be configured to receive optical sensor data from the optical sensor. The one or more controllers may be configured to analyse the optical data for determining the crop flow parameter. This may include performance of an optical flow analysis for determining a measure of a crop flow parameter for crop components within the optical sensor data.

The crop flow parameter may comprise a measure of a uniformity of crop flow through a sensing region of the sensing arrangement. This may include an analysis of the crop flow parameter over time, and/or may comprise identifying through application of the optical flow analysis one or more regions within the crop flow associated with an anomalous flow characteristic. An anomalous flow characteristic may, for example, correspond to a material flow in an unexpected direction compared with an expected flow direction. An anomalous flow characteristic may comprise a material flow at an unexpected speed compared with an expected material flow speed. The one or more controllers may be configured to identify one or more regions within the sensor data with an anomalous flow characteristic, which may correspond, for instance, to a blockage or turbulence in the crop flow.

The one or more crop guiding components may comprise a curtain or guide element for guiding crop material to a cutting system of the mowing unit. The one or more controllers may be configured for controlling an operational position thereof, which may include a vertical and/or horizontal position of the curtain or guide element. The operational position may comprise a rotational position of the curtain or guide element, such as adjusting a tilt, pitch and/or roll of the curtain or guide element in dependence on the determined crop flow parameter.

In some embodiments, the one or more controllers may be configured to adjust a height or vertical position of the crop guiding component(s) in dependence on an identification of an anomalous flow characteristic, such as a region of turbulent crop flow. The one or more controllers may be configured to control (e.g. increase) a horizontal separation between the crop guiding component(s) and one or more cutting elements of the mowing unit in dependence on an identification of an anomalous flow characteristic, again such as a region of turbulent crop flow.

The mowing unit may comprise one or more actuators for controlling an operational position of the crop guiding component(s). The actuator may comprise, for example, a linear actuator (e.g. a hydraulic, pneumatic or electric) which may be controllable under instruction from the control signal generated by the one or more controllers.

The controller(s) may be configured to generate a further control signal for controlling operation of one or more additional controllable components in dependence on the determined crop flow parameter. The additional controllable component(s) may comprise components downstream of the sensor arrangement. Advantageously, the controller(s) may be configured for adjusting operation of the component(s) to account for an observed crop flow as well as adjusting the guiding of crop into the mowing unit to control the crop flow itself.

The one or more additional controllable components may comprise a user interface of or otherwise associated with the agricultural machine. This may comprise, for example, a user terminal of the agricultural machine. It may comprise a display screen on a mobile user device associated with the machine. The one or more controllers may be configured for communicating, via the user interface, information relating to the determined crop flow parameter. This may comprise displaying via the user interface a graphical representation of the determined crop flow parameter. This may comprise utilising the user interface for providing an indication of an automated control action for the crop guiding component(s), e.g. providing an indication to the operator of the machine of an adjustment in the operational position of the crop guiding component(s). In some embodiments the controller(s) may be configured to provide a recommendation for controlling operation of the crop guiding component(s) via the user interface.

The one or more additional controllable components may comprise the mowing unit(s) and/or operational systems thereof (e.g. the cutting system). For instance, the one or more additional controllable components may comprise a cutting system for the mowing unit(s). The one or more controllers may be configured to control an operational speed of the cutting system in dependence on the determined crop flow parameter. Where the cutting system comprises a series of blades or cutting discs, the operational speed may comprise a rotational speed. Where the cutting system comprises a cutter bar, the operational speed may relate to an operational frequency of the cutting system.

The one or more controllers may additionally or alternatively be configured to control an operational position of the mowing unit(s) and/or the cutting system thereof. The one or more controllers may be configured to control a pitch, yaw and/or tilt of the cutting system or the cutting system with respect to a ground surface and/or the crop. This may be effected through control over one or more actuators, as will be appreciated. The one or more controllers may be configured for adjusting a lateral or vertical position of the cutting system in dependence on the determined crop flow parameter. This may include increasing or reducing a spacing between the cutting system and a ground surface - i.e. a cutting height for the cutting system - and/or controlling a separation between the cutting system and one or more further operational components of the mowing unit. This may include a distance between the cutting system and a conditioning mechanism, or between the cutting system and a guiding arrangement for controlling the movement and/or placement of cut crop material post processing by the mowing unit.

The additional component(s) may include a conditioning mechanism of the mowing unit. The conditioning mechanism may in some embodiments comprise a rotor having multiple conditioning elements operably mounted thereto, such as tines or plates. The one or more controllers may be configured to control an operational speed, e.g. a rotational speed, of the rotor for adjusting a level of conditioning applied to cut crop material by the conditioning mechanism, in use, in dependence on the crop flow parameter. The one or more controllers may be configured for adjusting an operational position of the conditioning mechanism, e.g. to adjust a size or shape of a crop flow path about the conditioning elements of the conditioning mechanism in dependence on the crop flow parameter. This may include a distance between the conditioning mechanism and a guiding arrangement for controlling the movement and/or placement of cut crop material post conditioning.

According to a further aspect of the disclosure, there is provided a control system for controlling operation of one or more operable components of an agricultural machine operating in a working environment, the agricultural machine comprising a tractor with a mowing unit operably coupled thereto; and wherein the control system comprises one or more controllers collectively configured to: receive sensor data from a sensor arrangement operably mounted to the mowing unit and having a sensing region which encompasses a crop flow associated with the mowing unit; analyse the sensor data to determine a crop flow parameter for the crop material mowing through the mowing unit; and generate and output a control signal for controlling an operational position of one or more crop guiding components upstream of the sensing region for controlling crop movement into the mowing unit in dependence on the determined crop flow parameter.

The one or more controllers may be configured in the same way as the one or more controllers of the agricultural machine of the preceding aspect(s) of the present disclosure.

The one or more controllers may collectively comprise an input (e.g. an electronic input) for receiving one or more input signals. The one or more input signals may comprise the sensor data. The one or more controllers may collectively comprise one or more processors (e.g. electronic processors) operable to execute computer readable instructions for controlling operation of the control system, for example, to determine the crop flow parameter. The one or more processors may be operable to generate one or more control signals for controlling operational position of the crop guiding component(s). The one or more controllers may collectively comprise an output (e.g. an electronic output) for outputting the one or more control signals.

A further aspect provides a method for controlling operation of one or more operable components of an agricultural machine operating in a working environment, the machine comprising a tractor having a mowing unit operably coupled thereto, and the method comprising: receiving sensor data from a sensor arrangement operably mounted to the mowing unit and having a sensing region which encompasses a crop flow associated with the mowing unit; analysing the sensor data to determine a crop flow parameter for the crop material mowing through the mowing unit; and controlling an operational position of one or more crop guiding components upstream of the sensing region for controlling crop movement into the mowing unit in dependence on the determined crop flow parameter.

The method may comprise performance of the operational steps for which the one or more controllers of any of the preceding aspects of the disclosure are configured.

A yet further aspect provides computer software which, when executed by one or more processors, causes performance of the method of the preceding aspect of the disclosure.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the invention / disclosure will now be described, by way of example only, with reference to the accompanying drawings, in which:
FIG. 1 is a simplified top down view illustrating an agricultural machine embodying aspects of the present disclosure;
FIG. 2 is a simplified side cross-sectional view of a mowing unit forming part of the agricultural machine of FIG. 1; and
FIG. 3 is a schematic view of a control system of the present disclosure.

### DETAILED DESCRIPTION

The figures illustrate embodiments of the present disclosure, which provides an agricultural machine here in the form of a tractor mower combination 2 comprising a tractor 4 which includes multiple mowing units 6, 8, 10 operably mounted thereto. It will be appreciated here that alternative embodiments may include different numbers of mowing units, e.g. a single mowing unit. The mowing units 6, 8, 10 are configured for cutting crop material C growing in a working environment. A sensor arrangement, here comprising a camera 20, is operably mounted to the agricultural machine or one or more components thereof, specifically here an underside of a frame 30 of the mowing unit 8 and having a sensing region which encompasses a crop flow associated with the machine 2, here in the region behind a cutting system 38 of the mowing unit 8. Sensor data from the camera 20 is used to determine a measure of a crop flow parameter for the crop material moving through the mowing unit 8. The crop flow parameter is used to control operation of one or more components of the machine 2, and in particular one or more crop guiding components upstream of the sensing region for controlling crop movement into the mowing unit 8. In the illustrated embodiment, the crop guiding component(s) include a curtain 32 of the mowing unit 8.

### Agricultural Machine

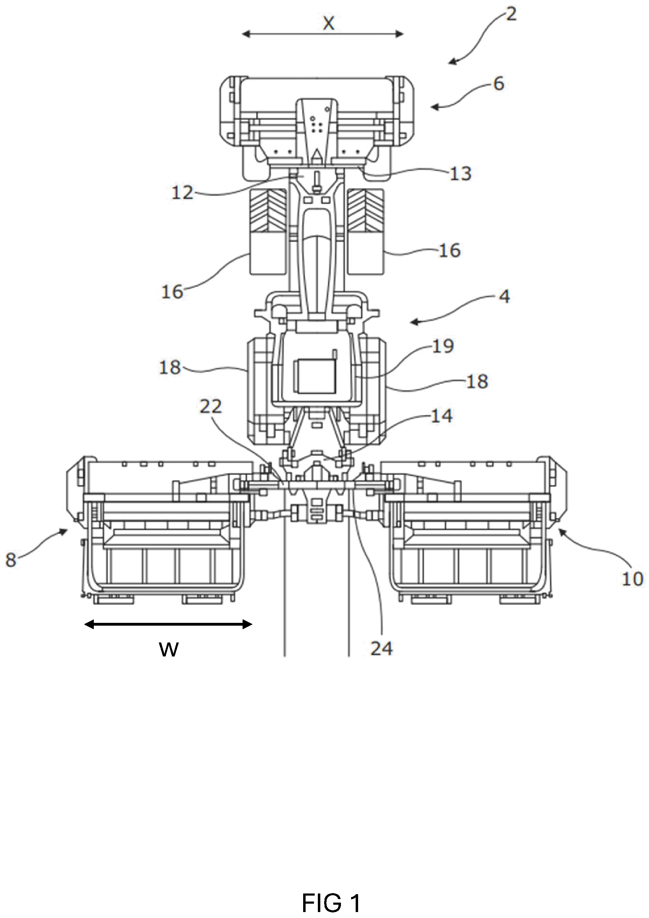

FIG. 1 is a schematic top down view of an agricultural machine 2 in the form of a tractor mower combination formed of a tractor 4, and an implement in the form of a front mowing unit 6. In the illustrated embodiment, tractor 4 comprises front and rear wheels 16, 18, any or all of which may be steerable as will be appreciated, along with an operator cab 19. The machine 2 forms a "butterfly-mower" arrangement which additionally includes first and second rear mowing units 8, 10. The front mowing unit 6 is operably coupled at a front hitch 12 of the tractor 4 and is moveable under the operation of an actuator mechanism 13. The first and second rear mowing units 8, 10 are operably coupled to a rear hitch 14 of the tractor 4 by respective mounting mechanisms 22, 24. The mounting mechanisms 22, 24 may be configured to allow the rear mowing units 8, 10 to be folded between operating (e.g. as shown in FIG 1) and a storage position - e.g. folded upwardly and inwards for transport and/or storage of the machine 2. Mounting mechanisms 22, 24 may additionally be configured for adjusting an operational position of the respective mowing units 8, 10, for example through control over the vertical height, horizontal position and/or pitch, yaw or tilt of the mowing units 8, 10. The mounting mechanisms 22, 24 may comprise suitably configured actuators for this purpose, as will be appreciated. As shown in FIG 1, in an operating position, first and second rear mowing units 8, 10 are positioned such that they are laterally spaced either side of a longitudinal axis of the tractor 4. At least the rear mowing units 8, 10 may be powered by a suitable mechanical coupling with a power take off shaft of the tractor 4 (not shown).

Whilst shown here in a "butterfly mower" arrangement, it will be appreciated that the disclosure is not limited in this sense, and the machine may be formed of a tractor with a single mowing unit, e.g. mowing unit 8, or may be a self-propelled mower / windrower having an integrated mowing unit.

### Mowing Unit

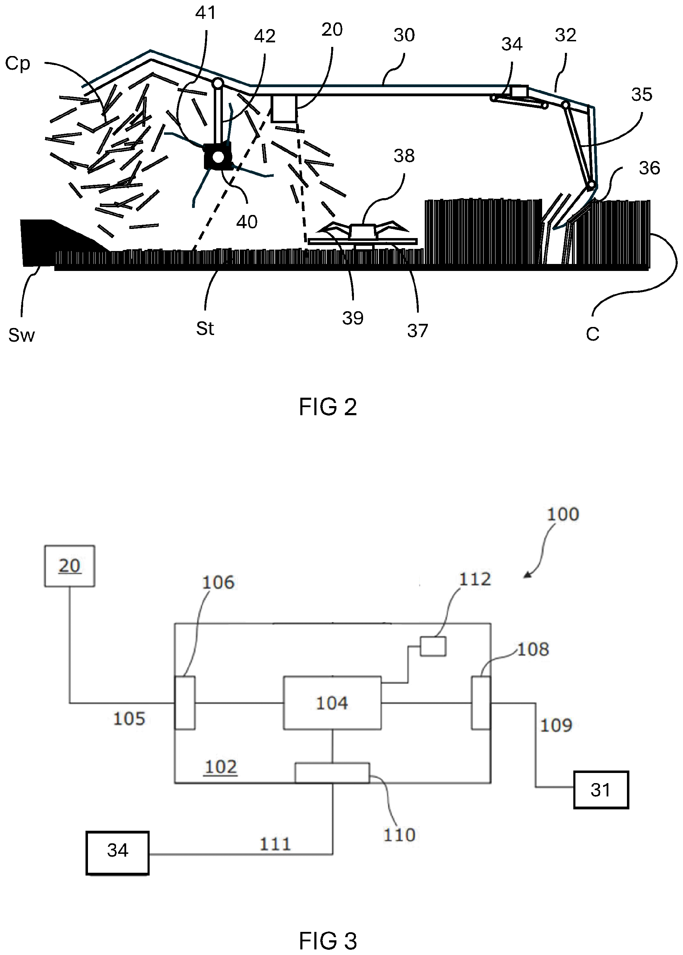

FIG. 2 illustrates an example mowing unit, here mowing unit 8, in more detail. The mowing unit 8 is formed of a frame 30 having a moveable curtain 32 arranged at a foremost section of the mowing unit 8, in a direction of motion, in use. The curtain 32 is moveable in a substantially horizontal direction with respect to the frame 30 under operation of a linear actuator 34 (which could be pneumatic, hydraulic or electric, as desired). The curtain 32 additionally includes and end section 36 connected to and moveable with respect to the remainder of the curtain 32. This movement may be manual, e.g. under impact with other objects such as crop material, but in the illustrated embodiment a further linear actuator 35 is provided for controlling this movement.

The mowing unit 8 additionally includes a cutting system here in the form of a series of rotary cutter discs 38 operably mounted to a cutter bar 37. Only a single cutter disc is displayed here for simplicity, however the skilled reader will understand how a series of cutter discs may be provided across a working width of the mowing unit 8, each of which being rotatable about substantially vertical axes defined by a central hub of the cutter discs 38. Such an arrangement is conventional in the technical field. The cutter discs 38 comprise a series of cutting elements 39 providing a working surface thereof for cutting crop material, in use.

The illustrated mowing unit 8 also incorporates a conditioning unit 40 here formed as a tine conditioner 40 having a rotor supported on the frame 30 of the mowing unit and having a series of tines 41 moveable in a circular path upon rotation of the rotor about a central axis. Again, such an arrangement is common in the field. The conditioning unit 40 of the illustrated embodiment is moveable in a substantially vertical direction under the action of a linear actuator 42. Movement of the conditioning unit 40 under the operation of the actuator 42 is used to adjust a conditioning path for cut crop material Cp between the tines 41 and the frame 30. As will be appreciated, adjustment of this conditioning path may advantageously adjust a level of conditioning applied to the cut crop material Cp, in use.

Cut (and optionally conditioned) crop material may be subsequently formed into a swath Sw left on the ground behind the machine 2, in use. The swath Sw may be collected and/or processed further through performance of one or more agricultural operations, as will be appreciated. The mowing unit 8 may include one or more guiding surfaces downstream of the conditioning unit 40 for controlling the placement of the swath Sw on the ground surface.

The operation of one or more of these components of the mowing unit 8 and more widely the agricultural machine 2 can be controlled in dependence on a crop flow parameter as discussed herein.

The mowing unit 8 is additionally provided with a sensor arrangement here in the form of a camera 20 operably mounted to the frame 30 of the mowing unit. The camera 20 has a sensing region which encompasses a crop flow between the cutting system 38 and the conditioning unit 40 (illustrated by the dotted lines in FIG. 2). In this embodiment, image data from the camera 20 is analysed (see below for a detailed discussion thereof) for determining a crop flow parameter for the crop cut crop material. As discussed herein, this is then used to control one or more controllable components of the agricultural machine 2, and specifically one or more crop guiding components (e.g. the curtain 32) upstream of the sensing region.

### Control System

FIG 3 illustrates the control system 100. As shown, control system 100 comprises a controller 102 having an electronic processor 104, an electronic input 106 and electronic outputs 108, 110. The processor 104 is operable to access a memory 112 of the controller 102 and execute instructions stored therein to perform the steps and functionality of the present disclosure discussed herein, e.g. by determining the crop flow parameter, and for controlling operation of one or more controllable components of the machine 2, including a crop guiding component e.g. the curtain 32.

The processor 104 is operable to receive sensor data via input 106 which, in the illustrated embodiment, takes the form of input signals 105 received from the camera 20. As discussed in detail hereinbelow, utilising this data, the processor 104 is configured to analyse the data and determine therefrom a measure of a crop flow parameter for crop material cut by the cutting system 38 of the mowing unit 8. Depending on the determined crop flow parameter, one or more control actions are determined for operational components of the machine 2, and specifically here for at least the curtain 32 of the mowing unit 8.

Specifically, controller 102 includes an electronic output 110 which is operably coupled to linear actuator 34 for controlling an operational position of the curtain 32 e.g. via a local control unit for the actuator 34. The control system 100 is operable to control or inform operation of the actuator 34 in the illustrated embodiment through output of control signals 111 via output 110 for receipt at a local control unit of the actuator 34 for controlling operation thereof for adjusting a position of the curtain 32 of the mowing unit 8, thereby controlling a separation between the curtain 32 and the cutting system 38. Advantageously, the positioning of the curtain 32 can be adjusted for controlling the interaction between the growing crop C and the cutting system 38. In some instances, for example, for given crop heights it may be more beneficial to increase or reduce the curtain-cutter system separation to ensure an even or uniform "feed" of crop material onto the cutting system 38 and the cutting elements 39 thereof. A turbulent or non-uniform feed of crop material onto the cutting system 38 may be inferred from the crop flow parameter measured by the camera 20, e.g. through observation of the behavior of the crop material following operation of the cutting system 38. The present disclosure hereby advantageously provides a system which can automate control over the curtain - cutting system separation to assist an operator.

Additionally, output 108 is operably coupled to a user interface here in the form of a display terminal 31 associated with the tractor 4, e.g. a display terminal provided in an operator cab 19 of the tractor 4. The control system 100 is operable to control or inform operation of the display terminal 31, in the illustrated embodiment through output of control signals 109 via output 108 for receipt at a local control unit of the display terminal 31 for controlling operation thereof for presenting to an operator of the tractor a graphical representation of the crop flow parameter. The graphical representation may be for information purposes only, and the operator may in turn decide themselves appropriate control actions to be taken in dependence on the information presented by the terminal 31. Alternatively, the display terminal 31 may be utilised to suggest control actions for the operation of the machine 2 based on the determined crop flow parameter. The display terminal 31 may, for instance, be used to issue a warning to the operator of a turbulent crop flow in the mowing unit 8 through provision of a graphical warning highlighting this.

The controller 102 may in some variants be further operable for controlling operation of one or more additional controllable components in dependence on the determined crop flow parameter. For instance, further systems or components of the mowing unit 8 can be controlled based on the determined crop flow parameter. This can include adjusting an operational speed or position of said components, or of the mowing unit 8, or tractor 4 as a whole.

For instance, the controller 102 may be operably connected to the mounting mechanism 22 (or at least a local control unit thereof - e.g. a tractor control system) for controlling an operational position of the mowing unit 8. In yet further use cases, a lateral position of the mowing unit 8 may be adjusted, or indeed a pitch, title or roll of the mowing unit 8 may be adjusted based on the crop flow parameter.

In a further extension, control system 100 may be further configured to control linear actuator 42 for controlling a vertical position of the conditioning unit 40 as discussed herein, e.g. via a local control unit for the actuator 42. The control system 100 may be operable to control or inform operation of the actuator 42 for raising or lowering the position of the conditioning unit 40 with respect to the ground surface. In turn, this may adjust the size of a conditioning channel or path as discussed herein, for adjusting a level of conditioning applied to the cut crop material Cp, and/or to account for an increase or decrease in an amount or volume of crop flowing through the conditioning channel/path. Advantageously, the crop flow parameter for a crop flow upstream of the conditioning unit 40 may inform a conditioning requirement of that cut crop material Cp. In this way, a level of conditioning applied to the crop material can be advantageously controlled.

In a still further extension of the illustrated embodiments, control system 100 may be further configured to control an operational speed of one or more components of the mowing unit 8 in dependence on the determined crop flow parameter. This can include an operational e.g. rotational, speed of the blades of the cutting system 38. For instance, a crop flow parameter indicative of an erratic or non-uniform crop flow may be indicative of a too low (or too high) cutting speed of the cutting system 38, which may be controlled accordingly.

The control system 100 may control a rotational speed of the rotor of the conditioning unit 40 in dependence on the crop flow parameter. As discussed above, the crop flow parameter may inform a conditioning requirement for the associated cut crop material Cp, and/or a need to increase or decrease the speed of the conditioning unit 40 based on an amount or volume of crop passing therethrough.

As will be appreciated, the operational speed of the components of the mowing unit 8 may be controllable through suitable control over a speed or operation of the power take off shaft of the tractor 4.

In yet a further extension of the illustrated embodiments, the control system 100 may be further configured to control a forward speed of the tractor 4 in dependence on the determined crop flow parameter. For instance, a forward speed of the tractor 4 may be reduced where a turbulent crop flow is observed, or where a blockage is identified or determined to be imminent on the basis of the crop flow parameter.

### Crop Flow Parameter Determination

The process begins with collection and receipt of sensor data by the sensor arrangement. In the illustrated embodiments this comprises the collection of optical sensor data from the camera 20. The optical data is analysed through performance of an optical flow process applied to the sensor data. In practice, this may indicate or provide a measure of a direction and/or speed of a flow of objects within and moving through the sensing region. In turn, and by monitoring this over time a uniformity of this flow can be determined and anomalous flow characteristics or events identified through comparison of the speed and/or direction of material flow in one or more regions of the data when compared with a "normal" or expected flow characteristic. Upon detection of an anomalous flow characteristic or event, the system may categorize this in terms of whether this relates to a turbulence in the flow, e.g. a substantially periodical fluctuation in a flow characteristic, or whether this relates to a blockage or potential blockage of material in the sensing region. An appropriate control response may be initiated based thereon, here including control over the position of the curtain 32 for controlling the guiding of material into and through the mowing unit 8.

### Further Alternative Embodiments

The camera 20 is provided as an example sensor unit, and the skilled person will appreciate that other sensor types may be utilised here. A stereocamera may be advantageously used, with stereo image data providing size or distance information in the sensor data which can be used, e.g. by the controller 102 for determining the crop flow parameter. Alternatively, camera 20 may instead comprise a transceiver type sensor with received reflected measurement signals utilised, in use by the controller(s) 102 for determining the crop flow parameter therefrom. Example transceiver type sensors may include RADAR, LIDAR, ultrasonic or time-of-flight sensor, for example.

### General

Any process descriptions or blocks in flow diagrams should be understood as representing modules, segments, or portions of code which include one or more executable instructions for implementing specific logical functions or steps in the process, and alternate implementations are included within the scope of the embodiments in which functions may be executed out of order from that shown or discussed, including substantially concurrently or in reverse order, depending on the functionality involved, as would be understood by those reasonably skilled in the art of the present disclosure.

It will be appreciated that embodiments of the present invention can be realized in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as set out herein and a machine readable storage storing such a program. Still further, embodiments of the present invention may be conveyed electronically via any medium such as a communication signal carried over a wired or wireless connection and embodiments suitably encompass the same.

All references cited herein are incorporated herein in their entireties. If there is a conflict between definitions herein and in an incorporated reference, the definition herein shall control.

## Claims

1. An agricultural machine, comprising:
a tractor;
a mowing unit operably coupled to the tractor for cutting crop material growing in a working environment;
a sensor arrangement operably mounted to the mowing unit and having a sensing region which encompasses a crop flow associated with the mowing unit; and
one or more controllers operably configured to:
receive sensor data from the sensor arrangement;
analyse the sensor data to determine a crop flow parameter for the crop material mowing through the mowing unit; and
generate and output a control signal for controlling an operational position of one or more crop guiding components upstream of the sensing region for controlling crop movement into the mowing unit in dependence on the determined crop flow parameter.

2. An agricultural machine of claim 1, wherein the sensor unit is mounted on or is otherwise associated with a cutting system of the mowing unit and has a sensing region which encompasses a crop flow pre-processing of the crop material by the cutting system of the mowing unit.

3. An agricultural machine of claim 1, wherein the sensor unit is mounted on or is otherwise associated with a cutting system of the mowing unit and has a sensing region which encompasses a crop flow post-processing of the crop material by the cutting system of the mowing unit.

4. An agricultural machine of any preceding claim, wherein the sensor arrangement comprises; and wherein the one or more controllers are configured to analyse the optical data for determining the crop flow parameter through performance of an optical flow analysis for determining a measure of a crop flow parameter for crop components within the optical sensor data.

5. An agricultural machine of any preceding claim, wherein the crop flow parameter comprises a measure of a uniformity of crop flow through a sensing region of the sensing arrangement.

6. An agricultural machine of any preceding claim, wherein the one or more controllers are configured to analyse the crop flow parameter over time and identify through application of the optical flow analysis one or more regions within the crop flow associated with an anomalous flow characteristic; optionally wherein an anomalous flow characteristic corresponds to a material flow in an unexpected direction compared with an expected flow direction, and/or comprises a material flow at an unexpected speed compared with an expected material flow speed.

7. An agricultural machine of any preceding claim, wherein the one or more crop guiding components comprise a curtain or guide element for guiding crop material to a cutting system of the mowing until; and wherein the one or more controllers are configured for controlling an operational position of the curtain or guide element, including a vertical position, a horizontal position of the curtain or guide element; and/or a rotational position of the curtain or guide element in dependence on the determined crop flow parameter.

8. An agricultural machine of claim 6 or any claim dependent thereon, wherein the one or more controllers are configured to adjust a height or vertical position of the crop guiding component(s) in dependence on an identification of an anomalous flow characteristic.

9. An agricultural machine of claim 6 or any claim dependent thereon, wherein the one or more controllers are configured to control a horizontal separation between the crop guiding component(s) and one or more cutting elements of the mowing unit in dependence on an identification of an anomalous flow characteristic.

10. An agricultural machine of any preceding claim, wherein the controller(s) are configured to generate a further control signal for controlling operation of one or more additional controllable components in dependence on the determined crop flow parameter.

11. An agricultural machine of claim 10, wherein the one or more additional controllable components comprise a user interface of or otherwise associated with the agricultural machine; and wherein the one or more controllers are configured for communicating, via the user interface, information relating to the determined crop flow parameter.

12. An agricultural machine of claim 10 or claim 11, wherein the one or more additional controllable components comprise the mowing unit(s) and/or operational systems thereof.

13. An agricultural machine of claim 12, wherein the one or more additional controllable components comprise a cutting system for the mowing unit(s); and wherein the one or more controllers are configured to control an operational speed and/or an operational position of the cutting system in dependence on the determined crop flow parameter.

14. An agricultural machine of claim 12 or claim 13, wherein the additional component(s) comprise a conditioning mechanism of the mowing unit; the conditioning mechanism comprising a rotor having one or more conditioning elements; and wherein the one or more controllers are configured to control an operational speed and/or an operational position of the rotor for adjusting a level of conditioning applied to cut crop material by the conditioning mechanism in dependence on the crop flow parameter.

15. A control system for controlling operation of one or more operable components of an agricultural machine operating in a working environment, the agricultural machine comprising a tractor with a mowing unit operably coupled thereto; and wherein the control system comprises one or more controllers collectively configured to:
receive sensor data from a sensor arrangement operably mounted to the mowing unit and having a sensing region which encompasses a crop flow associated with the mowing unit;
analyse the sensor data to determine a crop flow parameter for the crop material mowing through the mowing unit; and
generate and output a control signal for controlling an operational position of one or more crop guiding components upstream of the sensing region for controlling crop movement into the mowing unit in dependence on the determined crop flow parameter.
